# EUROPEAN PATENT SPECIFICATION

(11) **EP 0 592 929 B1**
(45) Date of publication and mention of the grant of the patent: **02.01.1997**
(21) Application number: 93116109.5
(22) Date of filing: 06.10.1993
(51) Int. Cl.: H02K 15/02

(54) **Machine for manufacturing stator lamination stacks**
Maschine zur Herstellung von Stator-Blechpaketen
Machine pour fabriquer des tôles de stator

(30) Priority: 16.10.1992 IT PN920077
(43) Date of publication of application: 20.04.1994
(73) Proprietor: S.I.P.A. SOCIETA INDUSTRIALIZZAZIONE PROGETTAZIONE E AUTOMAZIONE - S.P.A., 31029 Vittorio Veneto (Treviso) (IT)
(72) Inventor: Corocher, Gianfranco, I-31015 Conegliano, Treviso (IT); Campo, Gino, I-31012 Cappella Maggiore, Treviso (IT); De Nardi, Ireneo, I-31016 Cordignano, Treviso (IT)
(74) Representative: Giugni, Valter

(56) References cited:
- DD-A- 113 146
- DD-B- 151 590
- SOVIET INVENTIONS ILLUSTRATED, EL section, week 9225, August 05, 1992 DERWENT PUBLICATIONS LTD., London

## Description

This invention relates to a new machine for building ferromagnetic lamination stacks used in the manufacture of stators, in particular stators of electric motors.

The technology used in manufacturing such stators is known universally and is used much in the same way by the various manufacturers of electric motors, apart from some differences which are mainly due to more or less automation implemented in connection with the related production processes.

Such a manufacturing technology is essentially based on following manufacturing cycle, which is shortly described here in order to enable a comparison to be more easily and clearly made between said manufacturing cycle and the new cycle according to the present invention, which will be described later on.

The first step encountered in the traditional manufacturing cycle involves each single lamination being punched and cut to shape for subsequent stacking with other similar punchings to form the lamination stack. The second phase involves said punchings being annealed, ie. heat-treated, whereas the third step involves said punchings, which are now available in great amounts in a stacked form, being aggregated to a certain amount so as to achieve the desired size and, therefore, the desired characteristics of the stator lamination stack.

In turn, such an aggregation step itself involves a sequence of sub-steps, wherein the first one of these sub-steps is the separation, from the previously formed big stack of punchings, of the laminations that are intended to exactly build up a stator lamination stack.

As previously described, in an industrial process, after having being punched the laminations, before being sent to the annealing oven, are collected together to form big stacks. Since punching is performed under addition of lubricant oil, the subsequent annealing step normally causes such lubricant oil used for punching to carbonize with the effect of welding together the edges of adjoining punchings being part of the same stack, cutting burrs being still present along said edges.

As a consequence it quite often occurs that, when removing the desired amount of punchings from the bottom of a same stack, an inconvenience is encountered in having to separate two or more punchings that got "stuck" together owing to said action of carbonized oil on the burrs during the annealing process.

Owing to the rather tenacious nature of such a sticking effect, it quite frequently turns out to be impossible to carry out said separation and, as a consequence, it is in all such cases necessary that the process be interrupted (with a resulting downtime), the stack be displaced, the required laminations be separated manually and, finally, the regular process be restored, whereas this of course involves considerable inconvenience and costs due to both the downtime and the intervention from the outside of the process itself, since all this practically prevents the process from being able to be fully automated.

Moreover, known machines, like that disclosed in DD-A-113146 do not allow a true continuous manufacturing, i.e to avoid down-times due to the need to refill an exausted stack.

It therefore would be desirable, and it is in fact a purpose of the present invention, to provide a machine for manufacturing stator lamination stacks formed by a number of single sheet-metal punchings being joined together, whereas such a machine is capable of both preventing said laminations sticking together from causing process stops, and therefore downtime problems, and enabling the entire cycle for the preparation of said lamination stacks to be fully automated.

Such a machine according to the present invention is as basically described in the appended claims.

For a better insight, however, the invention will be further described below, by way of non-limiting example, with reference to the accompanying drawings in which:
- Figure 1 is a schematical, front view of a portion of the equipment according to the present invention;
- Figures 2, 3 and 4 are views showing three distinct operation phases of the equipment according to the present invention;
- Figure 5 is a front view showing an operation phase extended to more portions of the equipment according to the present invention;
- Figures 6 and 7 are a view from the top of some portions of the equipment according to the present inventions;
- Figures 8, 9, 10, 11 and 12 are views showing other operation phases of portions of the equipment according to the present invention.

With reference to the above listed Figures, a piece of equipment is being shown which comprises:
1 - a turning platform carrying the vertical elements 2,
2 - vertical elements, each one of them supporting a respective stack of punchings,
3 - stacks of punchings,
4 - picking head for withdrawing a stack of punchings,
5 - picking arms for lifting and withdrawing a stack of punchings,
6 - claws for seizing a stack of punchings,
7 - displacement or travel sensing element,
8 - wedge for separating a stack of punchings,
9 - vertical element carrying a formed lamination stack,
10 - horizontal platform revolving around a vertical plane and carrying the vertical elements 9,
11 - lamination stack,
12 - lifting and lowering means for the stacks of punchings,
13 - half-stack transfer means.

The process according to the present invention is essentially based on the fact that the punchings used to form the stator lamination stack are not being picked from the bottom of the related stack into which the punchings have been previously aggregated, but they are on the contrary picked from the top of said stack; the process is further based on a single driving and control system which is programmable and acting on the various moving members of the equipment involved. This enables a number of further advantages to be obtained, as it will become apparent from the description below.

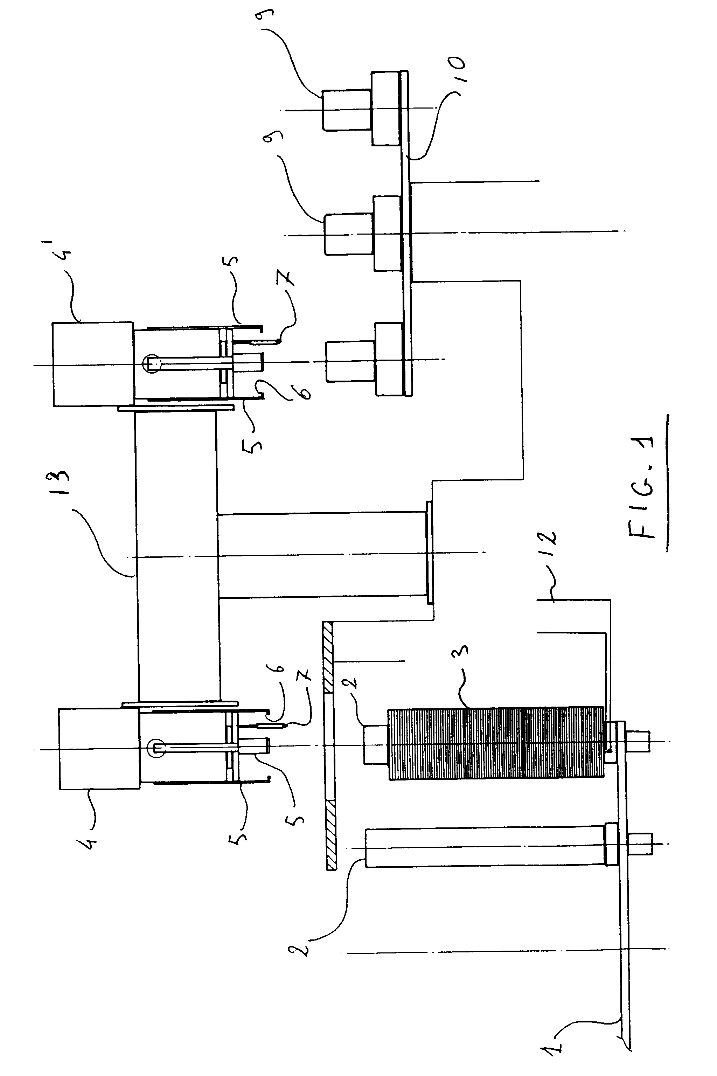

The equipment shown in the Figures comprises a platform 1 carrying a number of vertical elements 2; corresponding stacks 3 of punchings, which have been previously annealed and are ready to be associated into smaller groups so as to form a plurality of stator lamination stacks, are inserted on said vertical elements with traditional means (Fig. 1).

As it has been explained before, it may quite easily occur that some of said punchings, or groups of punchings, get stuck together.

Each one of said vertical elements 2 is provided with means 12, which are well-known in the art and controlled by the same driving and control system. These means, which will not be described here any further for the sake of simplicity, since their construction and operation are easily understood by anyone skilled in the art, are used to lift and lower the respective stacks of punchings.

A picking head 4 rests on the structure of the equipment and lies above a determined stack of punchings. This head is provided with a plurality of vertical, moving lifting and picking arms 5 which, when correspondingly controlled by driving and control systems as they are widely known in the art, are capable of being moved downwards and catch a particular punching by means of seizing claws 6 that are arranged at the lower end of said arms 5.

Said head 4 is further provided with a plurality of separation wedges 8 which are arranged circularly and radially at a same height around the stack of punchings 3. Said wedges are oriented towards the centre of the stack and are capable of moving radially inwards so as to intercept the punchings in the stack.

Furthermore, the head 4 is provided with a displacement sensing element 7 connected with a common driving and control system, said displacement sensing element 7 consisting essentially of a vertical moving arm which projects from the downward looking side of the head 4 and is adapted to move elastically upwards under the action of a solid moving vertically upwards, ie. the stack of punchings in this particular case, so that when this solid is lifted to the point it touches the lower end of said moving arm, the upward displacement that is induced on said moving arm defines the height of the top of the stack which, when compared with the height of the bottom, or base, of the same stack, ie. an information that is already known to the control system, immediately gives the total height of the punchings forming the stack.

The process according to the present invention is as follows:

When the process is started, the turning platform 1, with its vertical elements 2 supporting respective stacks of punchings, turns until it reaches a position in which a stack of punchings 3 is brought to lie exactly under the picking head 4. When said position of the turning platform 1 is reached, the means 12 provided for lifting and lowering the stack of punchings are actuated to lift said stack up to the point in which the surface of the punching 3', which lies on top of the stack 3, comes into contact with and start to push upwards the lower end of said displacement sensing element 7 (Fig. 2).

In such a way, the driving and control system of the equipment acquires the information concerning the height of the stack of punchings 3, since such a system receives at the same time also the data relating to the lifting of the stack 3, as actuated by the means 12.

It is of course possible that the height of the stack of punchings being processed in a given moment be different from the sum of the heights of the lamination stacks 11 that can be derived from it. However, this is detected immediately at the beginning of the process cycle, ie. when the vertical element 2 carrying the stack of punchings involved is lifted for the first time up to the point in which the displacement sensing element 7 feels the pushing action of the top punching 3', so that the driving and control system of the equipment is enabled to immediately find out by calculation the height of stack and divide it by the height of the required stator lamination stack. Should such a division fail to result in a whole number (of stator lamination stacks) and there is actually an excess portion of punchings, the system reacts as follows:

After having in this way acquired the height of the stack of punchings, and knowing already the required height of the stator lamination stack 11 since it is a pre-programmed information, the driving and control system of the equipment immediately calculates both the number of stator lamination stacks that can be derived therefrom and, at the same time, the residual height of punchings that cannot be used from that stack since their total height falls short of the actual height required for a stator lamination stack. It then stores in its memory the information concerning said height of excess punchings in the stack.

After it has in this way completed said preliminary operations, the system provides for the stack 3 of punchings being processed to be lifted by means of the lifting and lowering means 12 by such a height that the separation wedges 8 are able to get inserted in the stack at the height of a punching which has been selected to lie at a vertical distance from the punching 3' at the top of the stack that is equal to the programmed height of the stator lamination stack (Fig. 2).

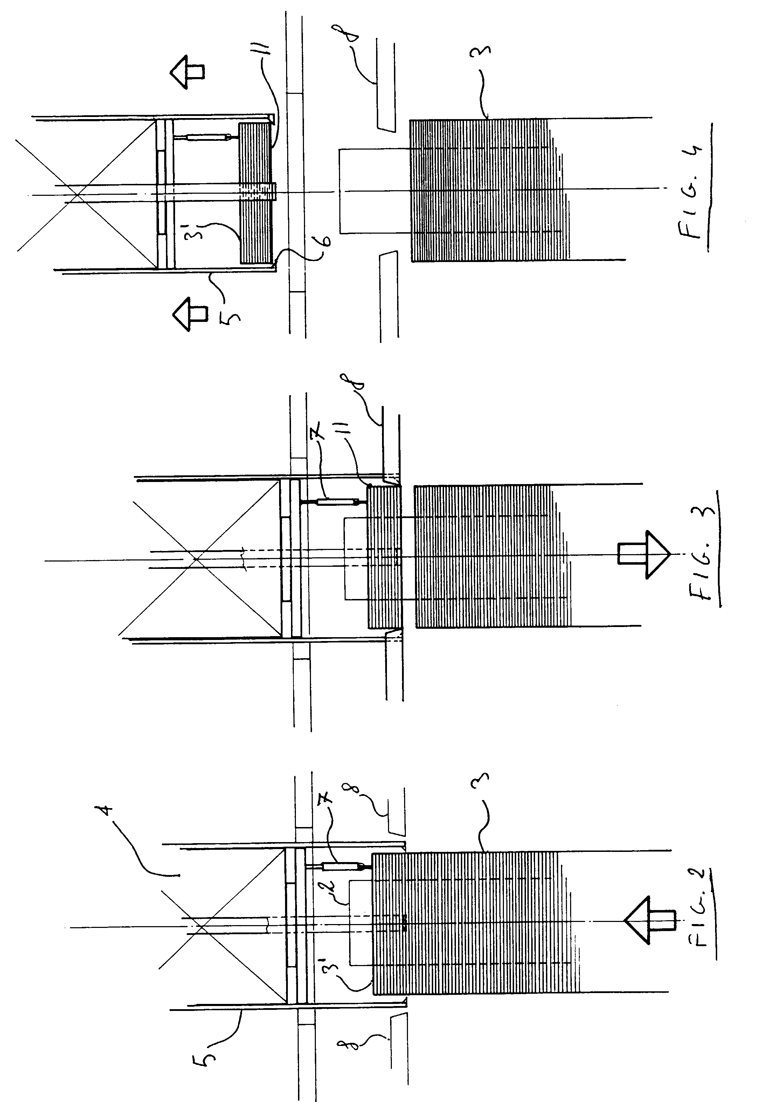

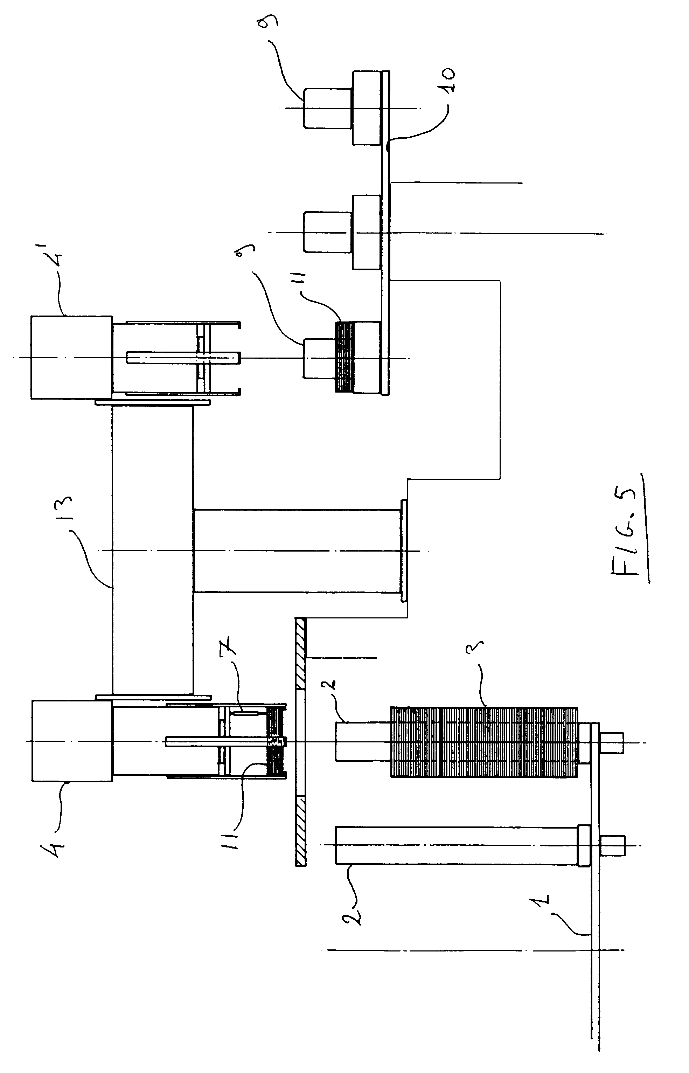

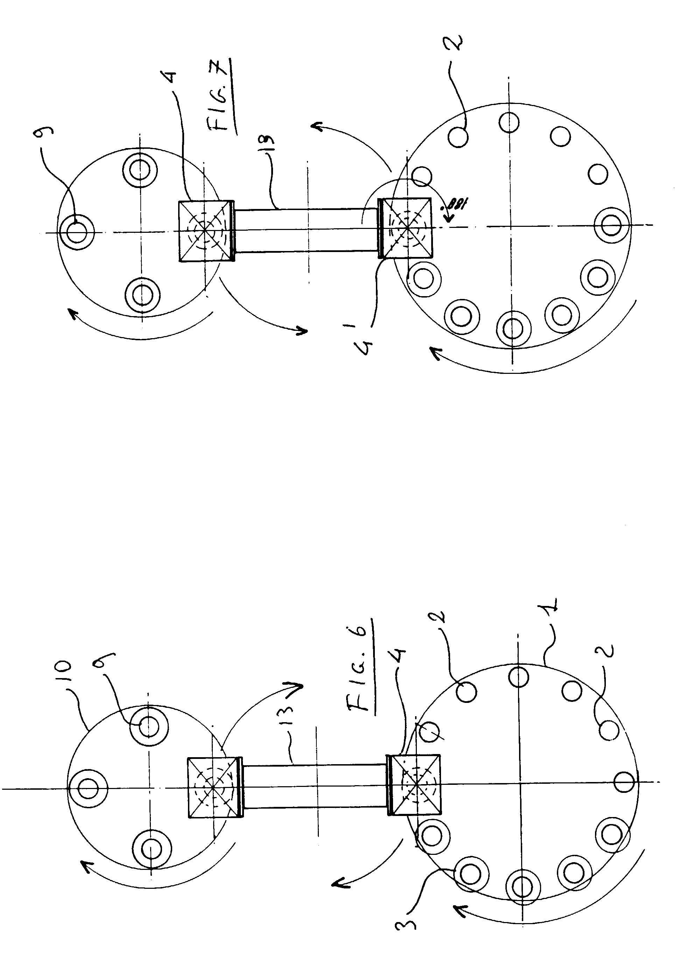

Said separation wedges do not actually get into the stack of punchings, but just grip the lower punchings above the selected punching, so that when the lifting and lowering means 12 causes the stack of punchings to be lowered, the whole stack sinks except for the portion of punchings above said selected punching (Fig. 3).

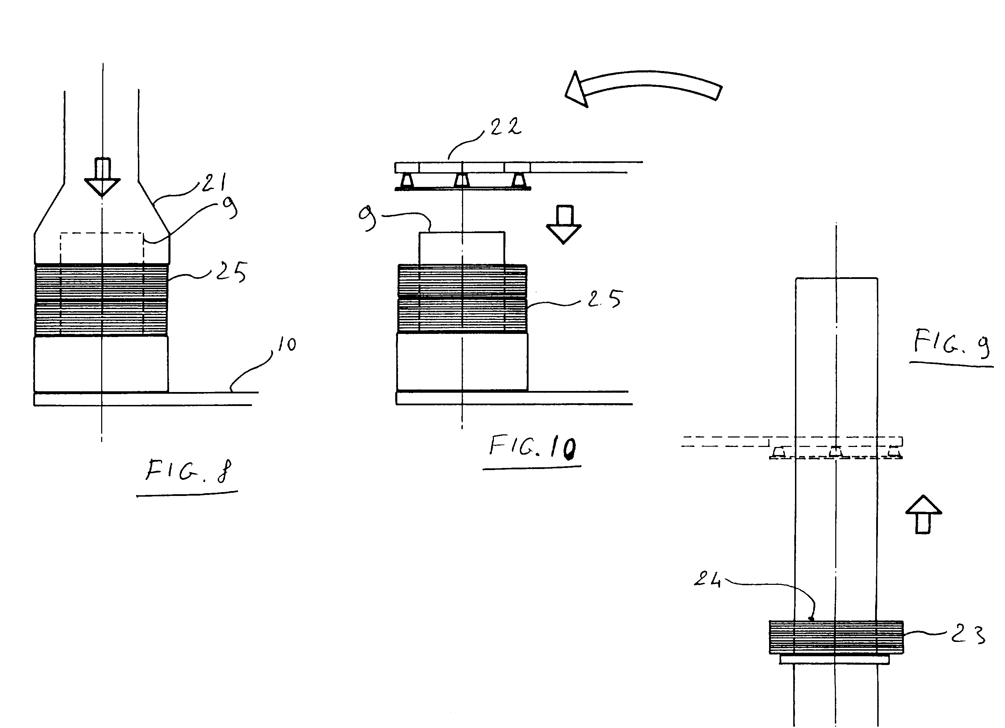

Immediately thereafter, the lifting and picking arms 5 are lowered and clamped in such a way that the lifting claws 6 get clamped around and under the punches being held by the separation wedges. Thereupon, said separation wedges are withdrawn, thereby allowing the suspended punchings to lie down on said lifting claws (Fig. 4).

A simplified alternative to the above described process consists in detecting the height of the stack of punchings as soon as it is brought into the process, whereas the number of stator lamination stacks that can be derived therefrom is calculated as in the above described method. Then the single stator lamination stacks are picked up to the last whole stack. At this moment the equipment changes to a new stack of punchings, while leaving the residual punchings on the formerly processed, just moved-off stack. This is then in a condition as to be replenished with a suitable amount of new punchings to restore the height of the stack, while considering that this height is actually not a critical process parameter.

Substantially, the process can be considered as to end here, since it is at this point possible to remove the stack of punchings that have been separated in the afore described way and that are forming exactly a stator lamination stack.

There are however a number of possible modifications and improvements to the above described process in view of making it really fully automatable, self-regulating and extremely efficient.

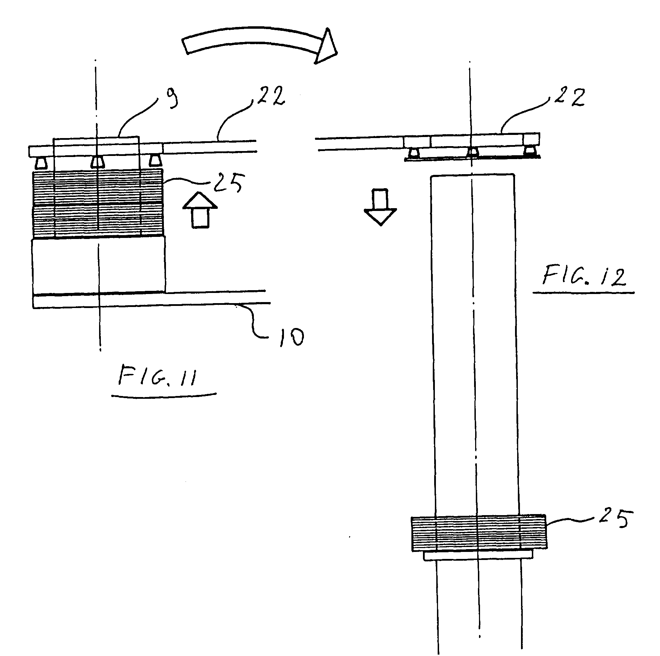

A first variant provides the use of handling means 13 that act on the just formed lamination stack 11 and transfer it on to a unloading vertical element 9 which retains said lamination stack 11 with its punchings still orderly arranged and resting horizontally upon each other, said unloading vertical element 9 being located, exactly as the formerly cited vertical elements 2, on a corresponding turning platform 10, from which each stator lamination stack is then withdrawn to complete the remaining manufacturing phases in a more or less traditional manner (Figs. 1, 5).

In an advantageous way, said handling means can be provided through a proper rotary movement imparted to the head 4 which, after unloding the stator lamination stack on to the corresponding vertical element 9, returns to its initial position in order to start a new cycle.

Immediately thereupon the above described cycle is started again with the vertical element 2 being raised by a length that is equal to the previous height plus the height of the new stator lamination stack, with the wedges 8 getting clamped in order to separate the stator lamination stack above from the rest of the stack of punchings below, etc.

When all possible stator lamination stacks are removed from a stack of punchings 3, the driving and control system, as it remembers the residual height of the punchings that have not been used, uses the process described below to pick up these punchings to unload them on to a new vertical element 9. Then it causes the turning platform 1 to revolve to such an extent that a new stack of punchings is brought under the picking head 4, from which the cycle is started anew with the vertical element now placed under said head being raised so that the height of the stack of punchings being now processed can be determined.

At this point the process is started again, however with the addition of a further phase consisting in picking up a height of punchings that corresponds to the height of missing punchings needed to form a complete lamination stack, and that was not available in the formerly processed stack of punchings, as well as in unloading this new height of punchings on to the incomplete lamination stack, so as to eventually complete that stack.

The manufacturing cycle is then continued in the afore described way, with the driving and control system that now calculates anew, and stores in its memory, the "new" height of the punchings left in the stack of punchings being processed, so as to enable the equipment to handle said punchings in the afore illustrated way and go through the described manufacturing process.

As the process continues, all stacks of punchings carried by the respective vertical elements are eventually used by the equipment to form lamination stacks, while the same vertical elements, as they become depleted, are then replenished with new stacks of punchings.

A further improvement to the process according to the invention is based on the fact that, due to the punchings not being perfectly planar after the annealing phase of the manufacturing process, corresponding mechanical and functional divergences occur in the same generants on the same stack, which therefore are converted into a corresponding lack of homogeneity in the behaviour of the resulting stators. Transfer means are therefore provided from the vertical elements 2 to the unloading vertical elements 9, said transfer means being essentially adapted to divide the lamination stack formation process into two distinct, basically similar processes, in each one of them a half stator lamination stack is actually selected and transferred on to a common vertical element 9, said processes differing from each other only in that one of them also comprises a phase provided to turn the respective half stack by 180° around a horizontal axis.

As a consequence, if on the contrary the process phase comprising the selection of a whole lamination stack is divided into a plurality of process phases consisting of following steps:
a) selection of a half-stack of punchings corresponding exactly to a half stator lamination stack;
b) tranfer of said half lamination stack on to the vertical element 9;
c) selection of a second half-stack similar to the first one;
d) rotation by 180° on a horizontal axis of said second half-stack; and
e) transfer of said second half-stack on to the same vertical element 9, exactly upon said first half-stack,
a complete stator lamination stack is eventually obtained, which, owing to its being formed by two identical, but overturned half-stacks, will show a much less appreciable, or even practically inexistent lack of homogeneity, as anyone skilled in the art is able to easily appreciate.

It is further fully apparent that the selection of two identical half-stacks, instead of a single stack, can be performed readily, since it only requires a halved amount of punchings to be programmed for selection by the equipment, and said halved amounts of punchings to be then transferred on to the receiving vertical element 9, said transfer action being alternately intercalated by said overturning action.

The above described improvement of the process according to the present invention is for instance implemented through the use of two similar picking heads 4 and 4' working alternately, so that one head 4 transfers, with a simple clockwise rotation (Fig. 6) by a half-turn, or by as much as is actually needed, of the transfer means 13, a half-stack on to a unloading vertical element 9, whereas the other head 4', which comes to be located above the second half-stack owing to said half-rotation, not only transfers said second half-stack on to the same vertical element 9 through an anti-clockwise rotation, but turns also the faces of said second half-stack, as afore described.

A further improvement is thereby achieved in the case that, due to possible errors in the planarity of the punchings as they may actually occur quite frequently, the stack clamping wedges do not tighten their grip exactly between the selected punching in the stack and the punching immediately thereunder, but get positioned against a punching that may lie more or less immediately above or under the punching that would have been selected in case of correct planarity and, therefore, cause a half-stack to be withdrawn with one or more punchings more or less than actually required, even if the total height of the stack appears to be correct.

To cope with this circumstance, a special control station is provided to act on the lamination stack as soon as the latter is formed and being transferred on to the respective vertical element 9 located on the revolving unloading platform 10.

Said control station comprises a pushing member 21 which acts with a downward movement and whose vertical displacement is detected by a device that is not further described here since it is well-known in the art (Fig. 8).

Said pushing member is applied successively with a certain downward force on each lamination stack 25 being unloaded on to said vertical elements 9. If the displacement of this pushing member with respect to a pre-determined height reference turns out to be equal to a pre-determined value corresponding to the correct number of punchings in the lamination stack, then the pushing member is raised and the just checked stator lamination stack is sent on to the further processing steps of the manufacturing cycle.

Should on the contrary such a displacement be found to exceed said pre-determined value, this is understood as meaning that the number of punchings in the stator lamination stack being checked falls short of the correct one, so that the driving and control system of the equipment activates a sub-routine that operates according to the following sequence:
- a picking element 22, such as for instance a device with pneumatically operated suction cups, is positioned above a buffer stack of punchings 23 located near the platform 10, is lowered until it touches the top punching 24 in that stack, seizes said punching by the action of the suction cups, withdraws said punching from its stack 23, transfers it above the lamination stack 25 and releases it thereupon (Figs. 9, 10);
- at this moment the pushing member 21 is re-actuated to measure again, according to the afore described method, the new height of the lamination stack being checked;
- if the height of the lamination stack measured in this way is found to be correct, the lamination stack is sent on to continue through the further steps of the manufacturing process;
- if on the contrary the lamination stack turns out to be still deviating due to an insufficient height, the process phase just described above is run through again in view of adding further punchings to the faulty lamination stack;
- each time that a new punching is added to the lamination stack, the latter is re-measured automatically;
- such a process is continued through a pre-determined number of times; if the lamination stack turns out to be still faulty even after such a number of trials, it is excluded from the manufacturing process for re-entering it later on in the form of a part of a newly established stack of punchings;
- should on the contrary the lamination stack turn out to be deviating due to its height exceeding the required one (a circumstance that may for instance occur when a punching selected for withdrawal adheres on its stack to the underlying punching, so that more punchings than actually required and programmed may be added to the faulty lamination stack), a special process for correcting the height of the lamination stack is started; this process is basically similar to the previously described one, with the only difference that, in this case, the picking element 22 is actuated to remove a punching at a time from the lamination stack 25 being processed, as well as to unload the same punching on to the buffer stack 23 (Figs. 11, 12);
- even in this case the process is repeated through a pre-determined number of times; if the lamination stack turns out to be still faulty even after such a number of trials, it is excluded from the manufacturing process for re-entering it later on in the form of a part of a newly established stack of punchings.

Anyone skilled in the art will at this point easily appreciate that this method of operation can most readily coexist with the afore described methods, since programming the driving and control system of the equipment accordingly, in a way that can be easily understood and performed by anyone skilled in the art, is all that is required to this purpose.

At this point, the inherent advantages of the process according to the present invention are most clearly appreciable: full automatability of the operations connected with the selection of the stator lamination stacks from the single stacks of punchings, easy and convenient programmability in view of manufacturing stator lamination stacks of varying size, remarkable operational flexibility, elimination of the withdrawal of the punchings from the bottom of the stack under resulting elimination of downtimes due to stackings being stuck to each other, automatic control and self-correction capability based on the actual height of each single stator lamination stack, automatic elimination of faulty lamination stacks with no interruption of the machine cycle, possibility of implementing all of the described operation through the use of techniques and materials that are widely known and available in the art.

A particularly advantageous alternative embodiment is obtained by replacing the plurality of wedges 8 with a plurality of wedges that are differently intercalated with a plurality of plane elements that rest on and are pressed against the vertical edges of the assembly 11 of the punchings forming the lamination stack, thereby acting in a similar, synchronous way at a height which is slightly higher than the height of the wedges.

This prevents the punching located in the lower position of the lamination stack from undergoing excessive distortion, and above all enables the assembly of punchings located above said lower punching to be maintained in a compact condition and in its regular order, so as to facilitate all further processing operations.

## Claims

1. Machine to form stator lamination stacks of a determined height, comprising:
- automatic pick-up means to pick-up and aggregate definite assemblies (11) of sheet-metal punchings having a constant, known thickness and arranged in vertical stacks (3), said pick-up means comprising a first pick-up and separation head (4) able to separate and lift said assemblies of sheet-metal punchings from the top portion of said vertical stack of punchings,
- a plurality of seizing and lifting arms (5) oriented vertically downwards and able to orderly tighten inwards so as to seize from the outside an assembly (11) of punchings off said stack by means of seizing claws (6) arranged at a lower end of said arms (5),
**characterized in that** it comprises:
- at least a plurality of vertical elements (2) to carry respective stacks (3) of punchings in a vertical arrangement,
- a plurality of unloading vertical elements (9) arranged so as to retain said punchings in a vertical arrangement resting orderly and horizontally upon each other, said elements being located on a second revolving platform (10),
- a control station for checking the height of the assembly of the punchings being unloaded on said unloading vertical elements (9), said control station comprising: a pushing element (21) that is forcefully displaced in a downward direction and is adapted to generate information relating to its downward displacement, a pick-up element (22), a buffer stack of punchings (23), said head (4) further comprising a displacement sensing element (7) arranged in the lower section and consisting of a moving rod that protrudes vertically and is adapted to be pushed upwards.

2. Machine according to claim 1, **characterized in that** it comprises:
- a second head (4') including corresponding same elements of the first head (4),
- means adapted to rotate by 180° on the horizontal plane the respective assembly of punchings being carried by said second head (4'),
- a revolving platform (1) on which a plurality of said vertical elements (2) are applied, said elements (2) being able to carry corresponding stacks (3) of punchings and being further capable of selectively transferring said stacks under said first head (4),
- controllable means (12) for lifting and lowering each stack of punchings being carried by said vertical elements (2).

3. Machine according to claim 2, **characterized in that** it comprises handling means (13) adapted to transfer said assemblies (11) of sheet metal punchings on said unloading vertical elements (9) that are displaceable so as to selectively accommodate the assemblies (11) of punchings being transferred by said handling means (13), and a plurality of clamping wedges (8) able to be tightened against said vertical stack (3) in order to cause an assembly (11) of punchings kept suspended when said stack is lowered, said clamping wedges being placed in between said arms (8) in such a way to allow independent movement of said arms (5) and wedges (8).

4. Machine according to claim 3, **characterized in that** said first head (4) is able to pick up and transfer on said unloading vertical element (9) a first half of the whole amount of punchings forming the assembly and said second head (4') is able to pick up and transfer on same said vertical element (9) a second half of the whole amount of punchings forming said assembly.

5. Machine according to claim 4, **characterized in that** said controllable lifting means (12) are able to lift the stack of punchings being processed by such a height that said clamping wedges (8) get tightened in correspondence of a punching at a vertical distance from the punching (3') at the top of a stack that is equal to the programmed height of the punching assembly.

6. Machine according to claim 5, **characterized in that**:
- the displacement of said sensing element (7) is able to supply information to detect the total height of the stack being processed,
- the control station is able to compute the possible surplus of punchings (25) in that stack , and
- the revolving platform (1) is caused to rotate to such an extent that a new stack of punchings is brought under the pick-up head (4 or 4') when said exact surplus is left on the stack being processed.

7. Machine according to claim 6, **characterized in that** said exact surplus (25) of lamination stack is automatically added with a fresh quantity of punchings after the rotation of the revolving platform.

8. Machine according to claim 7, **characterized in that**:
- the control station is able to compute the possible lack of punchings in that stack, and
- the revolving platform (1) is caused to rotate to such an extent that a new stack of punchings is brought under the pick-up head (4 or 4') when no punching is left on the stuck being processed,
- a height of punchings is withdrawn from said new stack of punchings, said height of punchings being equal to said lack of punchings of said stator lamination stack.

9. Machine according to any of the claims 7 or 8, **characterized in that** a pushing element (21) is provided above said unloading vertical element (9), said pushing element being able to press the underlying stack of punchings and to detect the exact height of said stack under pressure.

10. Machine according to claim 9, **characterized in that** a pick-up element (22) is positioned over a buffer stack (23) of punchings situated close to said second revolving platform (10), said pick-up element being able to be lowered until contact with the top punching (24) in that stack, to separate said top punching and transfer it over said lamination stack (25), to release it and to be positioned above said lamination stack (25), to be lowered until contact with the top punching of said lamination stack (25), and to separate and transfer it on said buffer stack (23).

## Patentansprüche

1. Maschine zum Herstellen von Stator-Blechpaketen einer vorgegebenen Höhe, die umfaßt:
- eine automatische Aufnehmeinrichtung, die bestimmte Gruppen (11) gestanzter Blechungen mit einer konstanten, bekannten Dicke, die in vertikalen Stapeln (3) angeordnet sind, aufnimmt und zusammensetzt, wobei die Aufnehmeinrichtung einen ersten Aufnehm-und-Trennkopf (4) umfaßt, der Gruppen gestanzter Blechungen vom oberen Teil des vertikalen Stapels gestanzter Blechungen trennen und anheben kann,
- eine Vielzahl von Greif-und-Hebearmen (5), die vertikal nach unten ausgerichtet sind, und geordnet nach innen drücken können, um so eine Gruppe (11) gestanzter Blechungen von außen mit Greifklauen (6), die an einem unteren Ende der Arme (5) angeordnet sind, von dem Stapel abzunehmen,
**dadurch gekennzeichnet**, daß sie umfaßt:
- wenigstens eine Vielzahl vertikaler Elemente (2), die entsprechende Stapel (3) gestanzter Blechungen in vertikaler Anordnung tragen,
- eine Vielzahl vertikaler Abladeelemente (9), die die gestanzten Blechungen in einer vertikalen Anordnung halten, die geordnet und horizontal aufeinanderliegen, wobei die Elemente auf einer zweiten Drehplattform (10) angeordnet sind;
- eine Kontrollstation zum Prüfen der Höhe der Gruppe der gestanzten Blechungen, die auf die vertikalen Abladeelemente (9) abgeladen werden, wobei die Kontrollstation umfaßt: ein Drückelement (21), das unter Druck nach unten verschoben wird und Informationen bezüglich seiner Verschiebung nach unten erzeugt, ein Abnehmelement (22), einen Pufferstapel gestanzter Blechungen (23), wobei der Kopf (4) des weiteren ein Verschiebungserfassungselement (7) umfaßt, das im unteren Abschnitt angeordnet ist und aus einer sich bewegenden Stange besteht, die vertikal vorsteht und nach oben gedrückt werden kann.

2. Maschine nach Anspruch 1, **dadurch gekennzeichnet**, daß sie umfaßt:
- einen zweiten Kopf (4'), der dem ersten Kopf (4) entsprechende gleiche Elemente enthält,
- eine Einrichtung, die die entsprechende Gruppe gestanzter Blechungen, die von dem zweiten Kopf (4') getragen werden, um 180° in der horizontalen Ebene dreht,
- eine Drehplattform (1), auf der sich eine Vielzahl der vertikalen Elemente (2) befindet, wobei die Elemente (2) entsprechende Stapel (3) gestanzter Blechungen tragen können und des weiteren in der Lage sind, die Stapel wahlweise unter den ersten Kopf (4) zu befördern,
- eine steuerbare Einrichtung (12) zum Anheben und Absenken jedes Stapels gestanzter Blechungen, der von den vertikalen Elementen (2) getragen wird.

3. Maschine nach Anspruch 2, **dadurch gekennzeichnet**, daß sie eine Transporteinrichtung (13) umfaßt, die die Gruppen (11) gestanzter Blechungen auf die vertikalen Abladeelemente (9) transportiert, die verschiebbar sind, um so wahlweise die Gruppen (11) gestanzter Blechungen aufzunehmen, die von der Transporteinrichtung (13) transportiert werden, sowie eine Vielzahl von Klemmkeilen (8), die an den vertikalen Stapel (3) gedrückt werden können, so daß eine Gruppe (11) gestanzter Blechungen schwebend gehalten wird, wenn der Stapel abgesenkt wird, wobei die Klemmkeile so zwischen den Armen (8) angeordnet sind, daß unabhängige Bewegung der Arme (5) und der Keile (8) möglich ist.

4. Maschine nach Anspruch 3, **dadurch gekennzeichnet**, daß der erste Kopf (4) in der Lage ist, eine erste Hälfte der gesamten Menge gestanzter Blechungen, die die Gruppe bilden, aufzunehmen und auf das vertikale Abladeelement (9) zu transportieren, und der zweite Kopf (4') in der Lage ist, eine zweite Hälfte der gesamten Menge gestanzter Blechungen, die die Gruppe bilden, aufzunehmen und auf das gleiche vertikale Element (9) zu transportieren.

5. Maschine nach Anspruch 4, **dadurch gekennzeichnet**, daß die steuerbare Hebeeinrichtung (12) in der Lage ist, den Stapel gestanzter Blechungen, der bearbeitet wird, anzuheben, daß die Klemmkeile (8) an eine gestanzte Blechung in einem vertikalen Abstand von der gestanzten Blechung (3') an der Oberseite eines Stapels, die der programmierten Höhe der Gruppe gestanzter Blechungen entspricht, gedrückt werden können.

6. Maschine nach Anspruch 5, **dadurch gekennzeichnet**, daß:
- mit der Verschiebung des Erfassungselementes (7) Informationen zur Ermittlung der Gesamthöhe des Stapels erzeugt werden können, der bearbeitet wird,
- die Kontrollstation in der Lage ist, den möglichen Überschuß gestanzter Blechungen (25) in diesem Stapel zu errechnen, und
- die Drehplattform (1) so weit gedreht wird, daß ein neuer Stapel gestanzter Blechungen unter den Aufnehmkopf (4 bzw. 4') gebracht wird, wenn der genaue Überschuß auf dem Stapel verblieben ist, der bearbeitet wird.

7. Maschine nach Anspruch 6, **dadurch gekennzeichnet**, daß der genaue Überschuß (25) des Blechpakets nach dem Drehen der Drehplattform automatisch um eine neue Menge gestanzter Blechungen ergänzt wird.

8. Maschine nach Anspruch 7, **dadurch gekennzeichnet**, daß:
- die Kontrollstation in der Lage ist, die möglicherweise in diesem Stapel fehlende Menge gestanzter Blechungen zu errechnen, und
- die Drehplattform (1) so weit gedreht wird, daß ein neuer Stapel gestanzter Blechungen unter den Aufnehmkopf (4 bzw. 4') gebracht wird, wenn keine gestanzte Blechung auf dem Stapel verblieben ist, der bearbeitet wird,
- eine Höhe gestanzter Blechungen von dem neuen Stapel gestanzter Blechungen abgezogen wird, wobei die Höhe gestanzter Blechungen der in dem Stator-Blechpaket fehlenden Menge gestanzter Blechungen gleich ist.

9. Maschine nach einem der Ansprüche 7 oder 8, **dadurch gekennzeichnet**, daß ein Drückelement (21) über dem vertikalen Abladeelement (9) vorhanden ist, wobei das Drückelement in der Lage ist, auf den darunterliegenden Stapel gestanzter Blechungen zu drücken und die genaue Höhe des Stapels unter Druck zu ermitteln.

10. Maschine nach Anspruch 9, **dadurch gekennzeichnet**, daß ein Aufnehmelement (22) über einem Pufferstapel (23) gestanzter Blechungen nahe an der zweiten Drehplattform (10) angeordnet ist, wobei das Aufnehmelement bis zum Kontakt mit der obersten gestanzten Blechung (24) in diesem Stapel abgesenkt werden kann, die oberste gestanzte Blechung abtrennen und sie über das Blechpaket (25) transportieren, sie freigeben kann, und über dem Blechpaket (25) positioniert werden kann, bis zum Kontakt mit der obersten gestanzten Blechung des Blechpakets (25) abgesenkt werden kann und diese abtrennen und auf den Pufferstapel (23) transportieren kann.

## Revendications

1. Machine pour fabriquer des piles de tôles de stator d'une hauteur déterminée, comprenant :
- des moyens de prise automatique, pour prendre et agréger des ensembles définis **(11)** de pièces embouties de feuilles métalliques, ayant une épaisseur constante connue et agencées en piles verticales **(3)**, lesdits moyens de prise comprenant une première tête de prise et de séparation **(4)**, capable de séparer et de soulever lesdits ensembles de pièces embouties de feuilles métalliques, depuis la partie supérieure de ladite pile verticale de pièces embouties,
- une pluralité de bras de saisie et de levage **(5)**, orientés verticalement vers le bas et capables d'effectuer un serrage régulier vers l'intérieur, de façon à saisir, depuis l'extérieur, un ensemble **(11)** de pièces embouties provenant de ladite pile, au moyen de pinces de saisie **(6)**, agencées à une extrémité inférieure desdits bras **(5)**, caractérisée en ce qu'elle comprend:
- au moins une pluralité d'éléments verticaux **(2)**, pour transporter les piles respectives **(3)** de pièces embouties dans un agencement vertical,
- une pluralité d'éléments verticaux de déchargement **(9)**, agencés de façon à maintenir lesdites pièces embouties dans un agencement vertical, reposant régulièrement et horizontalement les unes sur les autres, lesdits éléments étant situés sur une deuxième plate-forme tournante **(10)**,
- une station de commande, pour vérifier la hauteur de l'ensemble des pièces embouties déchargées sur lesdits éléments verticaux de déchargement **(9)**, ladite station de commande comprenant: un élément de poussée **(21)**, qui est déplacé énergiquement vers le bas et qui est susceptible de générer des informations concernant son déplacement vers le bas, un élément de prise **(22)**, une pile tampon de pièces embouties **(23)**, ladite tête **(4)** comprenant, en outre, un élément détecteur de déplacement **(7)**, agencé dans la partie inférieure et constitué d'une tige mobile, qui fait saillie verticalement et qui est susceptible d'être poussée vers le haut.

2. Machine selon la revendication 1, caractérisée en ce qu'elle comprend:
- une deuxième tête **(4')**, comportant des éléments identiques correspondant à la première tête **(4)**,
- des moyens susceptibles de tourner de 180° sur le plan horizontal, le montage respectif de pièces embouties étant transporté par ladite deuxième tête
- une plate-forme tournante **(1)**, sur laquelle une pluralité desdits éléments verticaux **(2)** sont appliqués, lesdits éléments **(2)** étant capables de porter des piles correspondantes **(3)** de pièces embouties et étant, en outre, capables de transférer, de manière sélective, lesdites piles sous ladite première tête **(4)**,
- des moyens contrôlables pouvant être commandés **(12)**, pour lever et baisser chaque pile de pièces embouties portée par lesdits éléments verticaux **(2)**.

3. Machine selon la revendication 2, caractérisée en ce qu'elle comprend des moyens de manipulation **(13)** susceptibles de transférer lesdits ensembles **(11)** de pièces embouties de feuilles métalliques sur lesdits éléments verticaux de déchargement **(9)**, qui peuvent être déplacés de façon à recevoir, de manière sélective, les ensembles **(11)** de pièces embouties transférés par lesdits moyens de manipulation **(13)**, et une pluralité de coins de serrage **(8)** capables d'être serrés contre ladite pile verticale **(3)**, afin de maintenir suspendu un ensemble **(11)** de pièces embouties lorsque ladite pile est descendue, lesdits coins de serrage étant placés entre lesdits bras **(8)** d'une manière permettant un mouvement indépendant desdits bras **(5)** et coins **(8)**.

4. Machine selon la revendication 3, caractérisée en ce que ladite première tête **(4)** est capable de prendre et de transférer, sur ledit élément vertical de déchargement **(9)**, une première moitié de la quantité totale de pièces embouties constituant l'ensemble, et ladite deuxième tête **(4')** est capable de prendre et de transférer, sur le même élément vertical **(9)**, une deuxième moitié de la quantité totale de pièces embouties constituant ledit ensemble.

5. Machine selon la revendication 4, caractérisée en ce que lesdits moyens de levage contrôlables pouvant être commandés **(12)** sont capables de lever la pile de pièces embouties traitée, d'une hauteur telle que lesdits coins de serrage **(8)** viennent se serrer en correspondance d'une pièce emboutie, à une distance verticale de la pièce emboutie **(3')** située au-dessus d'une pile, qui est égale à la hauteur programmée de l'ensemble de pièces embouties.

6. Machine selon la revendication 5, caractérisée en ce que:
- le déplacement dudit élément détecteur **(7)** est capable de délivrer des informations pour détecter la hauteur totale de la pile traitée,
- la station de commande est capable de calculer l'excédent possible de pièces embouties **(25)** dans cette pile, et
- la plate-forme tournante **(1)** est mise en rotation dans une mesure telle qu'une nouvelle pile de pièces embouties est amenée sous la tête de prise **(4** ou **4')** lorsque ledit excédent exact est laissé sur la pile traitée.

7. Machine selon la revendication 6, caractérisée en ce que ledit excédent exact **(25)** d'empilement de tôles de stator est automatiquement ajouté à une nouvelle quantité de pièces embouties, après rotation de la plate-forme tournante.

8. Machine selon la revendication 7, caractérisée en ce que:
- la station de commande est capable de calculer le manque possible de pièces embouties dans cette pile, et
- la plate-forme tournante **(1)** est mise en rotation dans une mesure telle qu'une nouvelle pile de pièces embouties est amenée sous la tête de prise **(4** ou **4')** lorsqu'aucune pièce emboutie ne reste sur la pile traitée,
- une certaine hauteur de pièces embouties est extraite de ladite nouvelle pile de pièces embouties, ladite hauteur de pièces embouties étant égale audit manque de pièces embouties dudit empilement de tôles de stator.

9. Machine selon l'une quelconque des revendications 7 ou 8, caractérisée en ce qu'un élément de poussée **(21)** est prévu au-dessus dudit élément vertical de déchargement **(9)**, ledit élément de poussée étant capable de comprimer la pile sous-jacente de pièces embouties et de détecter la hauteur exacte de ladite pile comprimée.

10. Machine selon la revendication 9, caractérisée en ce qu'un élément de prise **(22)** est positionné sur une pile tampon **(23)** de pièces embouties, située prés de ladite deuxième plate-forme tournante **(10)**, ledit élément de prise étant capable d'être descendu jusqu'au contact avec la pièce emboutie supérieure **(24)** de cette pile, pour séparer ladite pièce emboutie supérieure et la transférer sur ledit empilement de tôles **(25)**, pour la libérer et pour être positionnée au-dessus dudit empilement de tôles **(25)**, pour être descendue jusqu'au contact avec la pièce emboutie supérieure dudit empilement de tôles **(25)**, et pour la séparer et la transférer sur ladite pile tampon **(23)**.
